# EUROPEAN PATENT SPECIFICATION

(11) **EP 4 311 007 B1**
(45) Date of publication and mention of the grant of the patent: **05.11.2025**
(21) Application number: 22916714.3
(22) Date of filing: 27.12.2022
(51) Int. Cl.: H01M 50/35, H01M 50/367, H01M 50/249, H01M 50/211, H01M 50/271, H01M 50/30, H01M 50/209

(54) **BATTERY PACK AND VEHICLE INCLUDING THE SAME**
BATTERIEPACK UND FAHRZEUG DAMIT
BLOC-BATTERIE, ET VÉHICULE LE COMPRENANT

(30) Priority: 27.12.2021 KR 20210188983; 23.06.2022 KR 20220076628
(43) Date of publication of application: 24.01.2024
(73) Proprietor: LG ENERGY SOLUTION, LTD., Seoul 07335 (KR)
(72) Inventor: SHIN, Ju-Hwan, Daejeon 34122 (KR); PARK, Myung-Ki, Daejeon 34122 (KR); PARK, Won-Kyoung, Daejeon 34122 (KR); SEONG, Jun-Yeob, Daejeon 34122 (KR); WOO, Sung-Hoon, Daejeon 34122 (KR); LEE, Tae-Kyeong, Daejeon 34122 (KR); LEE, Hyoung-Suk, Daejeon 34122 (KR)
(74) Representative: Plasseraud IP
(86) International application number: PCT/KR2022/021427
(87) International publication number: WO 2023/128573

(56) References cited:
- CN-A- 109 088 122
- CN-A- 110 444 835
- CN-A- 110 739 424
- CN-A- 112 331 981
- CN-A- 112 652 857
- CN-A- 112 688 019
- JP-A- 2011 070 872
- KR-A- 20200 098 281

## Description

### TECHNICAL FIELD

The present disclosure relates to a battery pack and a vehicle including the same, and more specifically, to a battery pack configured to discharge a high-temperature gas to the outside of the battery pack without affecting other adjacent battery modules when the gas is generated inside the battery module, and a vehicle including the same.

The present application claims priority to Korean Patent Application No. 10-2021-0188983 filed on December 27, 2021 in the Republic of Korea and Korean Patent Application No. 10-2022-0076628 filed on June 23, 2022 in the Republic of Korea.

### BACKGROUND ART

CN112688019A discloses a power battery heat flow discharge method.

KR20200098281A relates to a battery system comprising a plurality of battery cells.

CN110739424A provides a battery box and a battery box thermal runaway monitoring method.

As the demand for portable electronic products such as notebooks, video cameras, and mobile phones rapidly increases and the commercialization of robots and electric vehicles begins in earnest, research on high-performance secondary batteries capable of repeated charging and discharging is being actively conducted.

Currently commercialized secondary batteries include nickel cadmium batteries, nickel hydrogen batteries, nickel zinc batteries, and lithium secondary batteries. Among them, lithium secondary batteries are in the limelight because of their advantages of free charge and discharge, very low self-discharge rate, and high energy density, as the memory effect hardly occurs compared to nickel-based secondary batteries.

These lithium secondary batteries mainly use lithium-based oxide and carbon material as positive electrode active material and negative electrode active material, respectively. A lithium secondary battery includes an electrode assembly in which a positive electrode plate and a negative electrode plate coated with such a positive electrode active material and a negative electrode active material, respectively, are disposed with a separator therebetween, and an exterior material, that is, a battery case for sealing and accommodating the electrode assembly together with electrolyte.

In general, lithium secondary batteries may be classified into a can-type secondary battery in which an electrode assembly is embedded in a metal can and a pouch-type secondary battery in which an electrode assembly is embedded in a pouch of an aluminum laminate sheet, depending on the shape of the exterior material.

Recently, secondary batteries have been widely used for driving or energy storage not only in small devices such as portable electronic devices, but also in medium and large-sized devices such as electric vehicles and energy storage systems (ESSs). Many of these secondary batteries may be accommodated together inside a module case in a state of being electrically connected, which may configure one battery module, and such battery modules may be electrically connected again in a narrow space to increase energy density, which configures a battery pack.

However, when a plurality of battery modules exist in a dense state in a narrow space as above, they may be vulnerable to accidents such as fire or explosion. For example, when an event such as thermal runaway occurs in one battery module, high-temperature venting gas may be discharged from the battery module. If this venting gas is not properly discharged to the outside of the battery pack, it may be propagated to other battery modules provided inside the battery pack, which may cause a chain reaction. Also, in this case, the pressure inside the battery pack increases, and there is a possibility of explosion. When the battery pack explodes, not only great damage may be caused to nearby devices or users due to the pressure of the explosion, but also the range and speed of damage may be further increased. Therefore, it is required to develop a battery pack having a structure that allows the high-temperature venting gas to be safely discharged to the outside of the battery pack without affecting other adjacent battery modules when an abnormality occurs in some battery modules and a venting gas is discharged.

### DISCLOSURE

### Technical Problem

The present disclosure is designed to solve the problems of the related art, and therefore the present disclosure is directed to controlling the flow of a venting gas in a desired direction by adding an additional venting channel formation structure to an existing battery pack.

In another aspect, the present disclosure is directed to allowing the high-temperature venting gas ejected when a thermal event occurs in some battery modules to be safely discharged to the outside of the battery pack without affecting other battery modules inside the battery pack.

However, the technical problem to be solved by the present disclosure is not limited to the above-mentioned problems, and other problems not mentioned will be clearly understood by those skilled in the art from the description below.

### Technical Solution

In one aspect of the present disclosure, there is provided a battery pack as defined in claim 1.

A sealing member may be provided between the barriers and the pack cover.

The pack cover may include a cover plate covering the accommodation space of the pack housing; and a channel plate coupled to an inner side of the cover plate and having the first side venting channel, the second side venting channel, and the center venting channel.

The channel plate may include a first channel plate coupled to the inner side of the cover plate at a position corresponding to the first battery modules and having the first side venting channel; a second channel plate coupled to the inner side of the cover plate at a position corresponding to the second battery modules and having the second side venting channel; and a third channel plate coupled to the inner side of the cover plate at a position corresponding to the center space and having the center venting channel.

The pack housing may have a gas collection space formed in at least one of one side and the other side along an extension direction of the center venting channel.

The pack housing may have a venting hole configured to allow the venting gas in the gas collection space to be discharged to the outside of the pack housing.

The first side venting channel and the second side venting channel may have a groove shape formed on an inner side of the pack cover.

The first side venting channel and the second side venting channel may have a groove shape formed on one side of the first channel plate and the second channel plate, respectively, and a side of the first channel plate and the second channel plate opposite to the side on which the groove is formed may be coupled on the inner side of the cover plate.

The first side venting channel and the second side venting channel may be provided in plurality along a longitudinal direction of the battery pack, respectively.

The center venting channel may include a first center venting channel communicating with the first side venting channel; and a second center venting channel communicating with the second side venting channel.

The third channel plate may include a first channel forming portion forming the first center venting channel communicating with the first side venting channel; a second channel forming portion forming the second center venting channel that communicates with the second side venting channel and does not communicate with the first center venting channel; and a coupling portion connecting the first channel forming portion and the second channel forming portion and coupled on the inner side of the cover plate.

A vehicle according to an embodiment of the present disclosure for achieving the above object includes the battery module according to the present disclosure.

### Advantageous Effects

According to one aspect of the present disclosure, when gas is generated inside the battery pack, the gas discharge direction may be appropriately controlled so that the generated venting gas may be discharged in a desired direction.

According to another aspect of the present disclosure, the discharge direction of the venting gas generated inside the battery pack may be effectively controlled without significantly changing the overall structure of the battery pack.

According to another aspect of the present disclosure, it is possible to delay/prevent the high-temperature venting gas generated from some battery modules having problems at the event of a thermal event from affecting adjacent battery modules.

According to another aspect of the present disclosure, the venting gas may be discharged quickly.

According to another aspect of the present disclosure, fire may be prevented or the rate of fire spread may be lowered.

According to another aspect of the present disclosure, secondary batteries where energy density is important may be arranged without providing a separate space for wiring to connect the battery modules and may be protected from external physical impact.

Accordingly, when the battery pack according to the present disclosure is applied to a vehicle, the occupant's safety may be ensured more effectively.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an exploded perspective view showing a battery pack according to an embodiment of the present disclosure.
FIG. 2 is a perspective view showing the appearance of a battery pack according to an embodiment of the present disclosure.
FIG. 3 is a diagram showing the inner space of a pack housing according to an embodiment of the present disclosure.
FIG. 4 is a diagram showing a battery module according to an embodiment of the present disclosure.
FIG. 5 is an exploded perspective view showing a battery module according to another embodiment of the present disclosure.
FIG. 6 is a diagram showing a flow path of gas in a battery pack according to an embodiment of the present disclosure.
FIG. 7 is a diagram showing an exemplary form of a barrier of the pack housing according to an embodiment of the present disclosure.
FIG. 8 is a cross-sectional view schematically showing an exemplary shape of a cross-section taken along line A-A' in FIG. 2.
FIG. 9 is a diagram showing exemplary forms of a cover plate and a channel plate according to an embodiment of the present disclosure.
FIG. 10 is a diagram showing exemplary forms of a collecting space and a venting hole of a pack housing according to an embodiment of the present disclosure.
FIG. 11 is a diagram showing an exemplary shape of a groove provided in the pack cover according to an embodiment of the present disclosure.
FIG. 12 is a diagram showing a flow path of gas in a battery pack according to another embodiment of the present disclosure.
FIG. 13 is a cross-sectional view schematically showing an exemplary shape of a cross section taken along line B-B', after the pack cover is coupled to another embodiment of FIG. 12.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

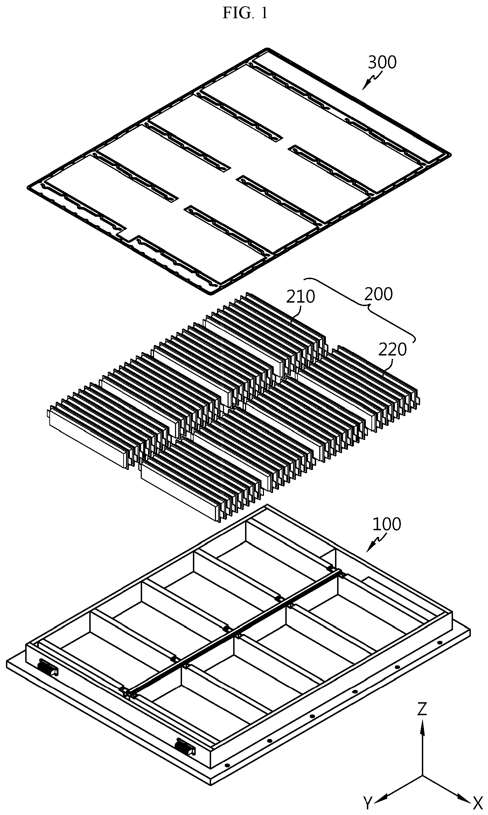

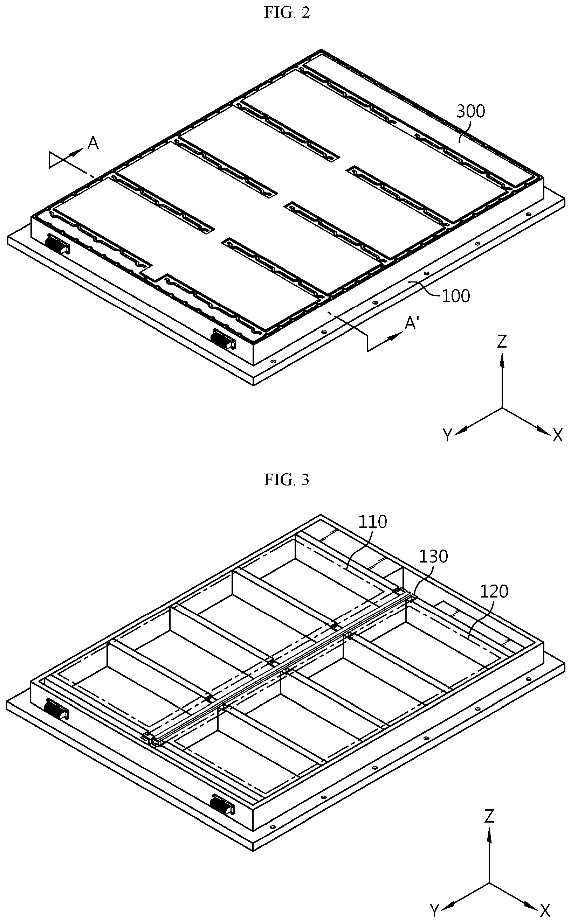

FIG. 1 is an exploded perspective view showing a battery pack according to an embodiment of the present disclosure, and FIG. 2 is a perspective view showing the appearance of a battery pack according to an embodiment.

Referring to FIGS. 1 and 2, a battery pack according to the present disclosure includes a pack housing 100, a battery module 200, and a pack cover 300.

The pack housing 100 may have an empty space formed therein to accommodate the battery module 200 in the inner space. For example, the pack housing 100 may include five plates without one side in the form of a rectangular parallelepiped. At this time, at least some of the individual plates constituting the pack housing 100 may be integrated with each other. Alternatively, the five plates may be separately manufactured and then coupled to each other through welding, bolting, or the like. The pack housing 100 may include, for example, a metal material such as aluminum. However, the present disclosure is not limited to the specific material of the pack housing 100.

As shown in FIG. 3, the pack housing 100 includes a first accommodation space 110, a second accommodation space 120 spaced apart from the first accommodation space 110, and a center space 130 formed between the first accommodation space 110 and the second accommodation space 120. The first accommodation space 110 may be disposed opposite to the second accommodation space 120 with the center space 130 interposed therebetween.

The battery module 200 includes at least one first battery module 210 disposed within the first accommodation space 110 and at least one second battery module 220 disposed within the second accommodation space 120. For example, as shown in FIG. 3, four first battery modules 210 may be provided in the first accommodation space 110 and four second battery modules 220 may be provided in the second accommodation space 120.

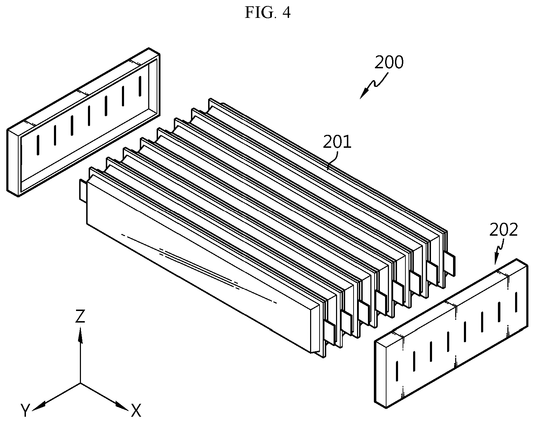

Referring to FIG. 4, the battery module 200 may include a battery cell 201. The battery cells 201 may be provided in plurality. The battery cell 201 may mean a secondary battery. The battery cell 201 may include an electrode assembly, an electrolyte, a battery case accommodating the electrode assembly and the electrolyte, and a pair of electrode leads connected to the electrode assembly and drawn out of the battery case. The battery cell 201 may be, for example, a pouch-type secondary battery. However, other types of secondary batteries, such as a cylindrical battery or prismatic battery, may also be employed as the battery cell 201 of the present disclosure.

When the battery cell 201 is provided in plurality, the plurality of battery cells 201 may be electrically connected. The battery module 200 may further include a bus bar frame assembly 202 for electrically connecting the plurality of battery cells 201 to each other. The bus bar frame assembly 202 may be provided in a pair, for example. In this case, the pair of bus bar frame assemblies 202 may be coupled to one side and the other side of the longitudinal direction of the battery cell 201, respectively.

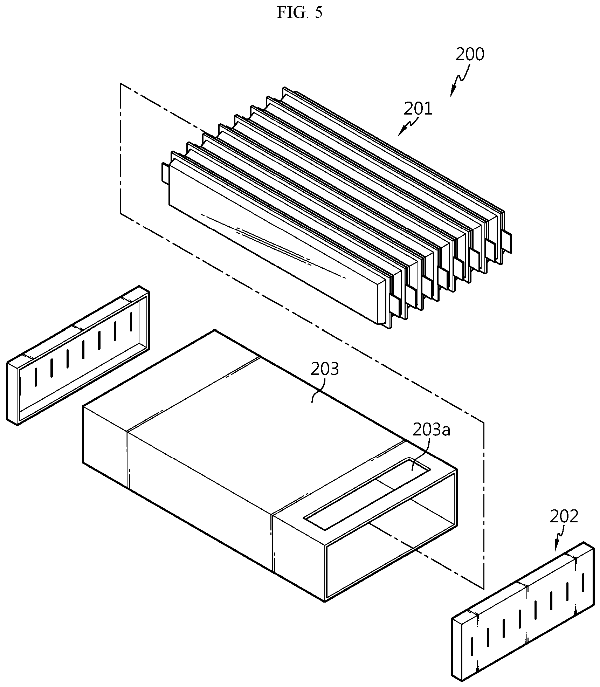

Referring to FIG. 5, the battery module 200 may further include a module case 203. The module case 203 may be configured to accommodate at least one battery cell 201. The module case 203 may include a venting hole 203a. When a venting gas is generated from the battery cell 201 accommodated in the inner space, the venting hole 203a may be configured to discharge the generated venting gas from the inside of the module case 203 to the outside.

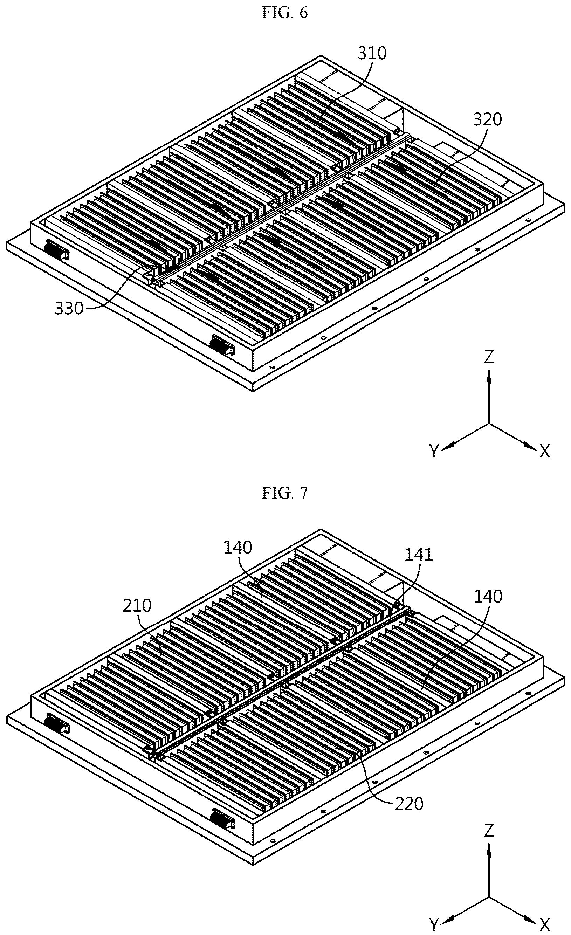

The pack cover 300 is coupled with the pack housing 100 to cover the battery module 200. Referring to FIG. 6 together with FIGS. 1 and 2, the pack cover 300 is coupled with the pack housing 100 to form a first side venting channel 310, a second side venting channel 320, and a center venting channel 330 in the inner space of the pack housing 100. The first side venting channel 310 is configured to guide a venting gas generated in the first battery module 210 to the center space 130 at a position corresponding to the first battery module 210. The second side venting channel 320 is configured to guide a venting gas generated in the second battery module 220 to the center space 130 at a position corresponding to the second battery module 220. The center venting channel 330 is configured to guide the venting gas collected toward the center space 130 from the inside of the pack housing 100 to the outside at a position corresponding to the center space 130. The first side venting channel 310, the second side venting channel 320, and the center venting channel 330 may be formed on the inner side of the pack cover 300.

According to this configuration of the present disclosure, it is possible to add a function of controlling the flow of a venting gas by creating a venting channel in the pack cover 300, which is used only for covering the pack housing 100 in a general case. Specifically, according to this configuration of the present disclosure, when a thermal event occurs in each battery module 200, the flame and venting gas move to the center space 130 along the first side venting channel 310 and the second side venting channel 320 formed between the upper part of the battery module 200 and the inner side of the pack cover 300, whereby the possibility of a thermal event spreading toward adjacent battery modules may be significantly reduced. In addition, according to this configuration of the present disclosure, since the venting gases collected in the center space 130 move again along the center venting channel 330 formed on the inner side of the pack cover 300, the temperature of the venting gas may drop during movement, and even when a flame is generated together with the venting gas, the intensity of the flame may be weakened while moving along the venting channel. Accordingly, it is possible to remove or reduce damage that may occur due to the ejection of high-temperature venting gas and flame to the outside.

Referring to FIG. 7, the pack housing 100 includes barriers 140 disposed at a position corresponding between the first battery modules 210 adjacent to each other and a position corresponding between the second battery modules 220 adjacent to each other, respectively. According to this configuration of the present disclosure, an independent accommodation space for each of the plurality of first battery modules 210 may be provided, and similarly, an independent accommodation space for each of the plurality of second battery modules 220 may be provided.

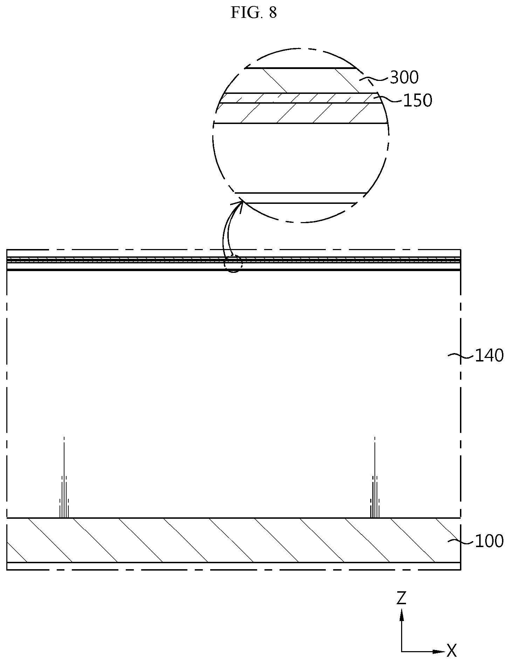

Referring to FIGS. 7 and 8, the barrier 140 may be coupled with the pack cover 300 to block the movement of a venting gas between the accommodation spaces of the first battery modules 210 adjacent to each other and the movement of a venting gas between the accommodation spaces of the second battery modules 220 adjacent to each other. Since the barrier 140 is coupled with the pack cover 300, the movement of a venting gas between the accommodation spaces of adjacent battery modules 200 may be blocked. The coupling may be performed by welding, bolting, or the like.

According to this embodiment of the present disclosure, since the accommodation spaces of the first battery modules 210 adjacent to each other and the accommodation spaces of the second battery modules 220 adjacent to each other are structurally isolated from each other by the barrier 140, the venting gas generated in each battery module does not move toward an adjacent battery module, but only moves toward the center space 130 through the first side venting channel 310 and the second side venting channel 320. The venting gas collected in the center space 130 may move through the center venting channel 330. During this movement, the temperature of the venting gas may decrease and the intensity of the flame may be weakened, thereby minimizing the effect of the high-temperature flame and venting gas generated in each battery module on other battery modules.

Meanwhile, as shown in FIG. 8, a sealing member 150 may be provided between the barrier 140 and the pack cover 300. The sealing member 150 may be configured to cover at least a part of the coupling portion of the barrier 140 and the pack cover 300.

According to this configuration of the present disclosure, the effect of preventing the venting gas from moving into the gap between the barrier 140 and the pack cover 300 may be further improved.

Meanwhile, the battery pack of the present disclosure may further include an additional barrier 141 for defining the accommodation space of the first battery module 210 and the accommodation space of the second battery module 220. In this case, the additional barrier 141 for defining the accommodation space of the first battery module 210 may be elongated along the extension direction of the center venting channel 330. Accordingly, the accommodation space for the first battery module 210 may be formed by the pack housing 100 and the additional barrier 141. Similarly, the additional barrier 141 for defining the accommodation space of the second battery module 220 may be elongated along the extension direction of the center venting channel 330. Accordingly, the accommodation space for the second battery module 220 may be formed by the pack housing 100 and the additional barrier 141. The additional barrier 141 for defining the accommodation space of the first battery module 210 and the additional barrier 141 for defining the accommodation space of the second battery module 220 may be spaced apart from each other to form the center space 130 therebetween. The additional barrier 141 may be formed to have an empty inside, so that the weight is reduced while maintaining rigidity. Therefore, in a secondary battery in which energy density is important, a high energy density may be secured.

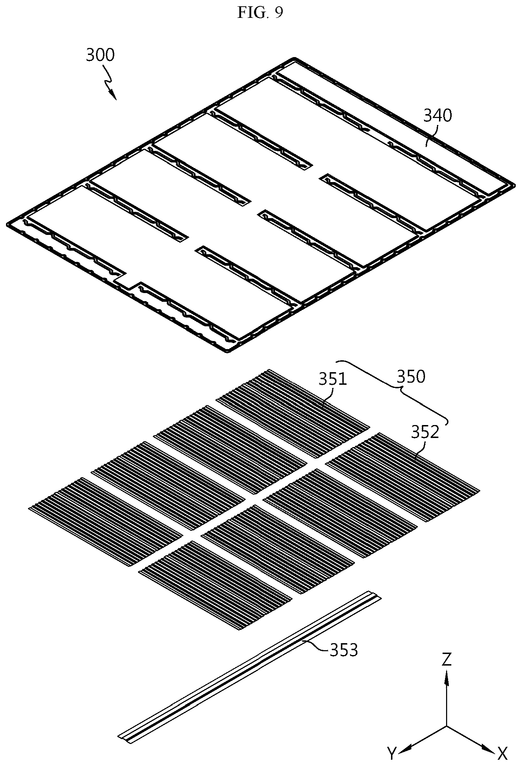

Referring to FIG. 9 together with FIGS. 1 and 2, the pack cover 300 may include a cover plate 340 and a channel plate 350. The cover plate 340 may be configured to cover the accommodation space of the pack housing 100. The channel plate 350 may be coupled to an inner side of the cover plate 340 and may include the first side venting channel 310, the second side venting channel 320, and the center venting channel 330.

The channel plate 350 may include a first channel plate 351, a second channel plate 352, and a third channel plate 353. The first channel plate 352 may be coupled to the inner side of the cover plate 340 at a position corresponding to the first battery module 210. The first channel plate 351 may include the first side venting channel 310. The second channel plate 352 may be coupled to the inner side of the cover plate 340 at a position corresponding to the second battery module 220. The second channel plate 352 may include the second side venting channel 320. The third channel plate 353 may be coupled to the inner side of the cover plate 340 at a position corresponding to the center space 130. The third channel plate 353 may include the center venting channel 330. At this time, at least some of the cover plate 340, the first channel plate 351, the second channel plate 352, and the third channel plate 353 may be integrated with each other, and the present disclosure is not limited to the case where individual plates are separately manufactured and coupled. In addition, the side venting channel and the center venting channel may be formed at positions corresponding to each battery module on each plate.

In particular, in the present disclosure, when the cover plate 340 and the channel plate 350 do not have an integrated form and are provided as separate parts and coupled, the pack cover 300 in a general form without a venting channel may be used as it is. In addition, according to the configuration of the present disclosure, when manufacturing the pack cover 300, production efficiency may be increased by separately manufacturing and coupling plates. On the other hand, as described above, when the venting channels 310, 320, 330 are on the inner side of the pack cover 300, it is possible to minimize the decrease in the accommodation space inside the pack housing 100 due to the formation of the venting channel, thereby securing efficient space utilization in secondary batteries where energy density is important.

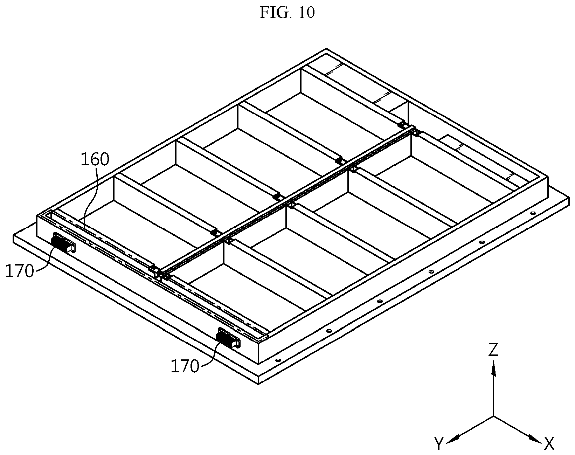

Referring to FIG. 10 together with FIGS. 6 and 9, the pack housing 100 may be configured to have a gas collection space 160 in at least one of one side and the other side along the extension direction of the center venting channel 330. The venting gas generated in the battery module 200 moves through the first side venting channel 310 and the second side venting channel 320, and the venting gas collected in the center space 130 in this way moves through the center venting channel 330 and is gathered in the gas collection space 160. For example, the gas collection space 160 may be provided at an end of the longitudinal direction of the pack housing 100 parallel to the extension direction of the center venting channel 330. In addition, the pack housing 100 may have a venting hole 170 so that the venting gas in the gas collection space 160 may be discharged to the outside of the pack housing 100. The venting hole 170 may have a shape penetrating the pack housing 100. In addition, the venting hole 170 may have not only a completely open form, but also may be configured in a form that is not completely open and is closed in a normal state and opened according to a change in pressure or temperature. However, the present disclosure is not limited to the shape, location, and number of the gas collection space 160 shown in FIG. 10 or the shape of the venting hole 170.

According to this embodiment of the present disclosure, when a large amount of venting gas is generated at once and the internal pressure of the battery pack increases, the internal pressure of the battery pack may be quickly reduced through the gas collection space 160 having a relatively larger volume than the side venting channels 310, 320 and the center venting channel 330. In addition, the venting gas may be discharged in an intended direction through the venting hole 170, and even if a large amount of venting gas is instantaneously generated, the gas may be discharged more rapidly and smoothly by increasing the size or number of the venting hole 170.

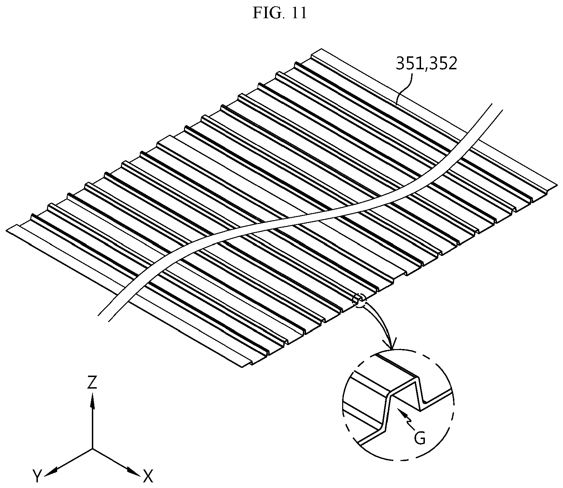

Referring to FIG. 11 together with FIGS. 6 and 9, the first side venting channel 310 and the second side venting channel 320 may have a groove shape G formed on the inner side of the pack cover 300. The first side venting channel 310 and the second side venting channel 320 may have a groove G shape formed on one side of the first channel plate 351 and the second channel plate 352, respectively.

In this case, the side of the first channel plate 351 and the second channel plate 352 opposite to the side on which the groove G is formed may be coupled to the inner side of the cover plate 340. According to this embodiment of the present disclosure, space efficiency may be increased in a secondary battery in which energy density is important because the groove is formed without the need of installing a separate member for forming a side venting channel on the inner side of the pack cover or plate. In addition, in this case, production is easy because the groove may be implemented more easily than coupling a separate member for forming a side venting channel with the pack cover or plate.

The groove G may be provided in plurality. In this case, the plurality of grooves G may be spaced apart from each other along a direction substantially perpendicular to the extension direction of the first venting channel 310 and the second venting channel 320, that is, in a direction substantially parallel to the extension direction of the center venting channel 330. Accordingly, the first side venting channel 310 and second side venting channel 320 may be provided in plurality along a direction substantially parallel to the extension direction of the center venting channel 330. The plurality of first side venting channels 310 and second side venting channels 320 may be spaced apart from each other along a direction substantially parallel to the extension direction of the center venting channel 330. The venting gas generated from the battery module 200 may move through the first side venting channel 310 and the second side venting channel 320 in the shape of a groove G formed between the battery module 200 and the inner side of the pack cover 300.

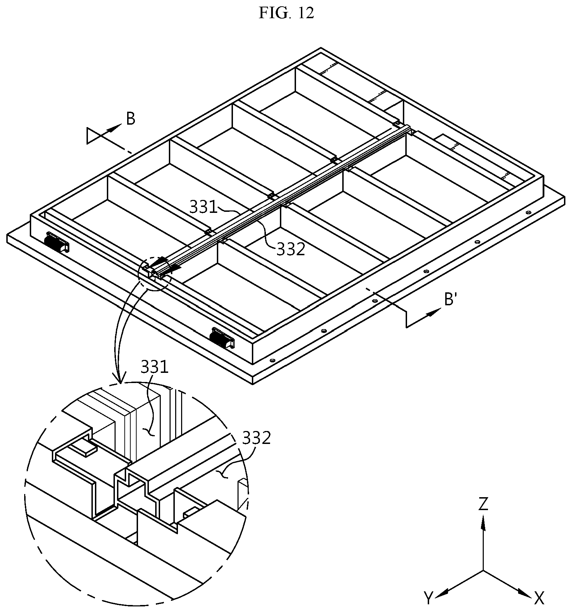

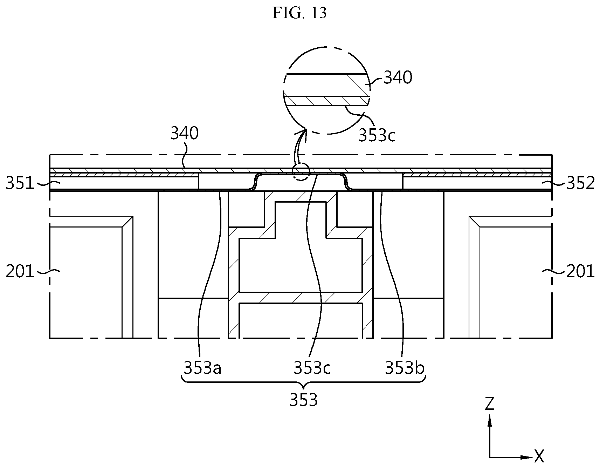

FIG. 12 is a diagram showing a flow path of gas in a battery pack according to another embodiment of the present disclosure. FIG. 13 is a cross-sectional view showing a pack cover according to another embodiment of the present disclosure.

In the battery pack, referring to FIGS. 12 and 13, the center venting channel 330 may include a first center venting channel 331 communicating with the first side venting channel 310 and a second center venting channel 332 communicating with the second side venting channel 320.

In this case, the venting gas generated from the first battery module 210 is collected in the center space 130 along the first side venting channel 310 and then moves along the first center venting channel 331, and independently, the venting gas generated from the second battery module 220 is collected in the center space 130 along the second side venting channel 320 and then moves along the second center venting channel 332.

The third channel plate 353 may include a first channel forming portion 353a forming the first center venting channel 331 communicating with the first side venting channel 310, a second channel forming portion 353b forming the second center venting channel 332, and a coupling portion 353c connecting the first channel forming portion 353a and the second channel forming portion 353b and coupled to the inner side of the cover plate 340. The third channel plate 353 may be elongated along the extension direction of the center venting channel 330. The first channel forming portion 353a may be spaced apart from the inner side of the cover plate 340 by a predetermined distance. Accordingly, the first center venting channel 331 may be formed in a space surrounded by the first channel forming portion 353a, the cover plate 340, and the coupling portion 353c. Similarly, the second channel forming portion 353b may be spaced apart from the inner side of the cover plate 340 by a predetermined distance. Accordingly, the second center venting channel 332 may be formed in a space surrounded by the second channel forming portion 353b, the cover plate 340, and the coupling portion 353c. For smooth communication between the first side venting channel 310 and the first center venting channel 331, the first channel forming portion 353a may be located at a height corresponding to the height (length extending along a direction parallel to the Z axis) of the battery cell 201 standing upright in the pack housing 100. Similarly, for smooth communication between the second side venting channel 320 and the second center venting channel 332, the second channel forming portion 353b may be located at a height corresponding to the height (length extending along the direction parallel to the Z axis) of the battery cell 201 standing upright in the pack housing 100.

According to this embodiment of the present disclosure, the venting gas generated in the first accommodation space 110 does not affect the second battery module 220 accommodated in the second accommodation space 120, and similarly, the venting gas generated in the second accommodation space 120 does not affect the first battery module 210 accommodated in the first accommodation space 110. Therefore, according to this embodiment, it is possible to effectively prevent the spread of events within the battery pack. That is, since the high-temperature flame and venting gas generated in the first battery module 210 inside the first accommodation space 110 move only through the first center venting channel 331, the second battery module 220 in the second accommodation space 120 is not affected. Similarly, since the high-temperature flame and venting gas generated in the second battery module 220 inside the second accommodation space 120 move only through the second center venting channel 332, they do not affect the first battery module 210 inside the first accommodation space 110. In addition, since the venting channel is formed only at the top of the center space 130, the empty space inside the additional barrier 141, which occupies most volume of the center space 130, may be used as a passage through which wires connecting battery modules pass. Also, the wires may be protected from physical impact by the additional barrier 141.

The battery pack according to the present disclosure may be applied to a vehicle such as an electric vehicle or a hybrid vehicle. That is, the vehicle according to the present disclosure may include the battery module according to the present disclosure or the battery pack according to the present disclosure. In addition, the vehicle according to the present disclosure may further include various other components included in a vehicle in addition to the battery module or the battery pack. For example, the vehicle according to the present disclosure may further include a vehicle body, a motor, and a control device such as an electronic control unit (ECU), in addition to the battery pack according to the present disclosure.

## Claims

1. A battery pack comprising:
a pack housing (100) having a first accommodation space (110), a second accommodation space spaced apart from the first accommodation space (110), and a center space (130) formed between the first accommodation space (110) and the second accommodation space (120);
at least two first battery modules (210) disposed within the first accommodation space (110);
at least two second battery modules (220) disposed within the second accommodation space (120); and
a pack cover (300) having a first side venting channel (310) configured to guide a venting gas generated from the first battery modules (210) to the center space (130) at a position corresponding to the first battery modules (210), a second side venting channel (320) configured to guide a venting gas generated from the second battery modules (220) to the center space (130) at a position corresponding to the second battery modules (220), and a center venting channel (330) configured to guide a venting gas collected toward the center space (130) to the outside of the pack housing (100) at a position corresponding to the center space (130), the pack cover (300) being configured to cover the battery modules (200) by being coupled to the pack housing (100),
**characterised in that** the pack housing (100) includes barriers (140) disposed at a position corresponding between the first battery modules (210) adjacent to each other and a position corresponding between the second battery modules (220) adjacent to each other, respectively, and
**in that** the barriers (140) are coupled with the pack cover (300) to block the movement of a venting gas between accommodation spaces of the first battery modules (210) adjacent to each other and the movement of a venting gas between accommodation spaces of the second battery modules (220) adjacent to each other.

2. The battery pack according to claim 1, wherein a sealing member is provided between the barriers (140) and the pack cover (300).

3. The battery pack according to claim 1, wherein the pack cover (300) includes:
a cover plate (340) covering the accommodation space of the pack housing (100); and
a channel plate (350) coupled to an inner side of the cover plate (340) and having the first side venting channel (310), the second side venting channel (320), and the center venting channel (330).

4. The battery pack according to claim 3, wherein the channel plate (350) includes:
a first channel plate (351) coupled to the inner side of the cover plate (340) at a position corresponding to the first battery modules (210) and having the first side venting channel (310);
a second channel plate (352) coupled to the inner side of the cover plate (340) at a position corresponding to the second battery modules (220) and having the second side venting channel (320); and
a third channel plate (353) coupled to the inner side of the cover plate at a position corresponding to the center space (130) and having the center venting channel (330).

5. The battery pack according to claim 1, wherein the pack housing (100) has a gas collection space formed in at least one of one side and the other side along an extension direction of the center venting channel (330).

6. The battery pack according to claim 5, wherein the pack housing (100) has a venting hole (170) configured to allow the venting gas in the gas collection space to be discharged to the outside of the pack housing (100).

7. The battery pack according to claim 1, wherein the first side venting channel (310) and the second side venting channel (320) have a groove shape formed on an inner side of the pack cover (300).

8. The battery pack according to claim 4, wherein the first side venting channel (310) and the second side venting channel (320) have a groove shape formed on one side of the first channel plate (351) and the second channel plate (352), respectively, and
wherein a side of the first channel plate (351) and the second channel plate (352) opposite to the side on which the groove is formed is coupled on the inner side of the cover plate (340).

9. The battery pack according to claim 1, wherein the first side venting channel (310) and the second side venting channel (320) are provided in plurality along a longitudinal direction of the battery pack, respectively.

10. The battery pack according to claim 4, wherein the center venting channel (330) includes:
a first center venting channel (331) communicating with the first side venting channel (310); and
a second center venting channel (332) communicating with the second side venting channel (320).

11. The battery pack according to claim 10, wherein the third channel plate (353) includes:
a first channel forming portion forming the first center venting channel (331) communicating with the first side venting channel (310);
a second channel forming portion forming the second center venting channel (332) that communicates with the second side venting channel (320) and does not communicate with the first center venting channel (310); and
a coupling portion connecting the first channel forming portion and the second channel forming portion and coupled on the inner side of the cover plate (340).

12. A vehicle, comprising the battery pack according to any one of claims 1 to 11.

## Patentansprüche

1. Batteriepack, umfassend:
ein Packgehäuse (100), welches einen ersten Aufnahmeraum (110), einen zweiten Aufnahmeraum, welcher von dem ersten Aufnahmeraum (110) beabstandet ist, und einen Mittelraum (130) aufweist, welcher zwischen dem ersten Aufnahmeraum (110) und dem zweiten Aufnahmeraum (120) gebildet ist;
wenigstens zwei erste Batteriemodule (210), welche in dem ersten Aufnahmeraum (110) angeordnet sind;
wenigstens zwei zweite Batteriemodule (220), welche in dem zweiten Aufnahmeraum (120) angeordnet sind; und
eine Packabdeckung (300), welche einen ersten Seitenbelüftungskanal (310), welcher dazu eingerichtet ist, ein Belüftungsgas, welches von den ersten Batteriemodulen (210) erzeugt wird, zu dem Mittelraum (130) an einer Position zu leiten, welche den ersten Batteriemodulen (210) entspricht, einen zweiten Seitenbelüftungskanal (320), welcher dazu eingerichtet ist, ein Belüftungsgas, welches von den zweiten Batteriemodulen (220) erzeugt wird, zu dem Mittelraum (130) an einer Position zu leiten, welche den zweiten Batteriemodulen (220) entspricht, und einen Mittelbelüftungskanal (330) aufweist, welcher dazu eingerichtet ist, ein Belüftungsgas, welches in Richtung des Mittelraums (130) gesammelt wird, zu der Außenseite des Packgehäuses (100) an einer Position zu leiten, welche dem Mittelraum (130) entspricht, wobei die Packabdeckung (300) dazu eingerichtet ist, die Batteriemodule (200) abzudecken, indem sie mit dem Packgehäuse (100) gekoppelt ist,
**dadurch gekennzeichnet, dass** das Packgehäuse (100) Grenzen (140) umfasst, welche an einer Position, welche einer zwischen den ersten Batteriemodulen (210) entspricht, welche zueinander benachbart sind, beziehungsweise einer Position angeordnet sind, welche einer zwischen den zweiten Batteriemodulen (220) entspricht, welche zueinander benachbart sind, und
dass die Grenzen (140) mit der Packabdeckung (300) gekoppelt sind, um die Bewegung eines Belüftungsgases zwischen Aufnahmeräumen der ersten Batteriemodule (210), welche zueinander benachbart sind, und die Bewegung eines Belüftungsgases zwischen Aufnahmeräumen der zweiten Batteriemodule (220) zu blockieren, welche zueinander benachbart sind.

2. Batteriepack nach Anspruch 1, wobei ein Abdichtelement zwischen den Grenzen (140) und der Packabdeckung (300) bereitgestellt ist.

3. Batteriepack nach Anspruch 1, wobei die Packabdeckung (300) umfasst:
eine Abdeckungsplatte (340), welche den Aufnahmeraum des Packgehäuses (100) abdeckt; und
eine Kanalplatte (350), welche mit einer inneren Seite der Abdeckungsplatte (340) gekoppelt ist und welche den ersten Seitenbelüftungskanal (310), den zweiten Seitenbelüftungskanal (320) und den Mittelbelüftungskanal (330) aufweist.

4. Batteriepack nach Anspruch 3, wobei die Kanalplatte (350) umfasst:
eine erste Kanalplatte (351), welche mit der inneren Seite der Abdeckungsplatte (340) an einer Position gekoppelt ist, welche den ersten Batteriemodulen (210) entspricht, und welche den ersten Seitenbelüftungskanal (310) aufweist;
eine zweite Kanalplatte (352), welche mit der inneren Seite der Abdeckungsplatte (340) an einer Position gekoppelt ist, welche den zweiten Batteriemodulen (220) entspricht, und welche den zweiten Seitenbelüftungskanal (320) aufweist; und
eine dritte Kanalplatte (353), welche mit der inneren Seite der Abdeckungsplatte (340) an einer Position gekoppelt ist, welche dem Mittelraum (130) entspricht, und welche den Mittelbelüftungskanal (330) aufweist.

5. Batteriepack nach Anspruch 1, wobei das Packgehäuse (100) einen Gassammelraum aufweist, welcher in wenigstens einer aus einer Seite und der anderen Seite entlang einer Erstreckungsrichtung des Mittelbelüftungskanals (330) gebildet ist.

6. Batteriepack nach Anspruch 5, wobei das Packgehäuse (100) ein Belüftungsloch (170) aufweist, welches dazu eingerichtet ist, dem Belüftungsgas in dem Gassammelraum zu ermöglichen, zu der Außenseite des Packgehäuses (100) abgeführt zu werden.

7. Batteriepack nach Anspruch 1, wobei der erste Seitenbelüftungskanal (310) und der zweite Seitenbelüftungskanal (320) eine Nutenform aufweisen, welche an einer inneren Seite der Packabdeckung (300) gebildet ist.

8. Batteriepack nach Anspruch 4, wobei der erste Seitenbelüftungskanal (310) und der zweite Seitenbelüftungskanal (320) eine Nutenform aufweisen, welche an einer inneren Seite der ersten Kanalplatte (351) bzw. der zweiten Kanalplatte (352) gebildet ist, und
wobei eine Seite der ersten Kanalplatte (351) und der zweiten Kanalplatte (352), welche entgegengesetzt zu der Seite ist, an welcher die Nut gebildet ist, an der inneren Seite der Abdeckungsplatte (340) gekoppelt ist.

9. Batteriepack nach Anspruch 1, wobei der erste Seitenbelüftungskanal (310) beziehungsweise der zweite Seitenbelüftungskanal (320) in einer Mehrzahl entlang einer Longitudinalrichtung des Batteriepacks bereitgestellt sind.

10. Batteriepack nach Anspruch 4, wobei der Mittelbelüftungskanal (330) umfasst:
einen ersten Mittelbelüftungskanal (331), welcher mit dem ersten Seitenbelüftungskanal (310) kommuniziert; und
einen zweiten Mittelbelüftungskanal (332), welcher mit dem zweiten Seitenbelüftungskanal (320) kommuniziert.

11. Batteriepack nach Anspruch 10, wobei die dritte Kanalplatte (353) umfasst:
einen ersten Kanalbildungsabschnitt, welcher den ersten Mittelbelüftungskanal (331) bildet, welcher mit dem ersten Seitenbelüftungskanal (310) kommuniziert;
einen zweiten Kanalbildungsabschnitt, welcher den zweiten Mittelbelüftungskanal (332) bildet, welcher mit dem zweiten Seitenbelüftungskanal (320) kommuniziert und nicht mit dem ersten Mittelbelüftungskanal (310) kommuniziert; und
einen Kopplungsabschnitt, welcher den ersten Kanalbildungsabschnitt und den zweiten Kanalbildungsabschnitt verbindet und an der inneren Seite der Abdeckungsplatte (340) gekoppelt ist.

12. Fahrzeug, umfassend den Batteriepack nach einem der Ansprüche 1 bis 11.

## Revendications

1. Bloc-batterie comprenant :
un logement de bloc (100) ayant un premier espace de réception (110), un deuxième espace de réception espacé du premier espace de réception (110), et un espace central (130) formé entre le premier espace de réception (110) et le deuxième espace de réception (120) ;
au moins deux premiers modules de batterie (210) disposés au sein du premier espace de réception (110) ;
au moins deux deuxièmes modules de batterie (220) disposés au sein du deuxième espace de réception (120) ; et
un couvercle de bloc (300) comportant un premier canal d'évent latéral (310) configuré pour guider un gaz d'évent généré à partir des premiers modules de batterie (210) vers l'espace central (130) à une position correspondant aux premiers modules de batterie 210), un deuxième canal d'évent latéral (320) configuré pour guider un gaz d'évent généré à partir des deuxièmes modules de batterie (220) vers l'espace central (130) à une position correspondant aux deuxièmes modules de batterie (220), et un canal d'évent central (330) configuré pour guider un gaz d'évent collecté vers l'espace central (130) vers l'extérieur du logement de bloc (100) à une position correspondant à l'espace central (130), le couvercle de bloc (300) étant configuré pour recouvrir les modules de batterie (200) en étant couplé au logement de bloc (100),
**caractérisé en ce que** le logement de bloc (100) inclut des barrières (140) disposées à une position correspondant entre les premiers modules de batterie (210) adjacents les uns aux autres et une position correspondant entre les deuxièmes modules de batterie (220) adjacents les uns aux autres, respectivement, et **en ce que** les barrières (140) sont couplées au couvercle de bloc (300) pour bloquer le mouvement d'un gaz d'évent entre les espaces de réception des premiers modules de batterie (210) adjacents les uns aux autres et le déplacement d'un gaz d'évent entre des espaces de réception des deuxièmes modules de batterie (220) adjacents les uns aux autres.

2. Bloc-batterie selon la revendication 1, dans lequel un organe d'étanchéité est prévu entre les barrières (140) et le couvercle de bloc (300).

3. Bloc-batterie selon la revendication 1, dans lequel le couvercle de bloc (300) inclut :
une plaque de couvercle (340) recouvrant l'espace de réception du logement de bloc (100) ; et
une plaque de canal (350) couplée à un côté intérieur de la plaque de couvercle (340) et comportant le premier canal d'évent latéral (310), le deuxième canal d'évent latéral (320) et le canal d'évent central (330).

4. Bloc-batterie selon la revendication 3, dans lequel la plaque de canal (350) inclut :
une première plaque de canal (351) couplée au côté intérieur de la plaque de couvercle (340) à une position correspondant aux premiers modules de batterie (210) et comportant le premier canal d'évent latéral (310) ;
une deuxième plaque de canal (352) couplée au côté intérieur de la plaque de couvercle (340) à une position correspondant aux deuxièmes modules de batterie (220) et comportant le deuxième canal d'évent latéral (320) ; et
une troisième plaque de canal (353) couplée au côté intérieur de la plaque de couvercle à une position correspondant à l'espace central (130) et comportant le canal d'évent central (330).

5. Bloc-batterie selon la revendication 1, dans lequel le logement de bloc (100) comporte un espace de collecte de gaz formé dans au moins un parmi un côté et l'autre côté suivant une direction d'extension du canal d'évent central (330).

6. Bloc-batterie selon la revendication 5, dans lequel le logement de bloc (100) comporte un orifice d'évent (170) configuré pour permettre au gaz d'évent dans l'espace de collecte de gaz d'être déchargé vers l'extérieur du logement de bloc (100).

7. Bloc-batterie selon la revendication 1, dans lequel le premier canal d'évent latéral (310) et le deuxième canal d'évent latéral (320) présentent une forme de rainure formée sur un côté interne du couvercle de bloc (300).

8. Bloc-batterie selon la revendication 4, dans lequel le premier canal d'évent latéral (310) et le deuxième canal d'évent latéral (320) présentent une forme de rainure formée sur un côté de la première plaque de canal (351) et de la deuxième plaque de canal (352), respectivement, et
dans lequel un côté de la première plaque de canal (351) et de la deuxième plaque de canal (352) opposé au côté sur lequel la rainure est formée est couplé sur le côté intérieur de la plaque de couvercle (340).

9. Bloc-batterie selon la revendication 1, dans lequel le premier canal d'évent latéral (310) et le deuxième canal d'évent latéral (320) sont fournis en nombres suivant une direction longitudinale du bloc-batterie, respectivement.

10. Bloc-batterie selon la revendication 4, dans lequel le canal d'évent central (330) inclut :
un premier canal d'évent central (331) communiquant avec le premier canal d'évent latéral (310) ; et
un deuxième canal d'évent central (332) communiquant avec le deuxième canal d'évent latéral (320).

11. Bloc-batterie selon la revendication 10, dans lequel la troisième plaque de canal (353) inclut :
une première portion formant canal formant le premier canal d'évent central (331) communiquant avec le premier canal d'évent latéral (310) ;
une deuxième portion formant canal formant le deuxième canal d'évent central (332) qui communique avec le deuxième canal d'évent latéral (320) et ne communique pas avec le premier canal d'évent central (310) ; et
une portion de couplage reliant la première portion formant canal et la deuxième portion formant canal et couplée sur le côté intérieur de la plaque de couvercle (340).

12. Véhicule, comprenant le bloc-batterie selon l'une quelconque des revendications 1 à 11.
